# EUROPEAN PATENT SPECIFICATION

(11) **EP 4 032 763 B1**
(45) Date of publication and mention of the grant of the patent: **04.12.2024**
(21) Application number: 21153227.0
(22) Date of filing: 25.01.2021
(51) Int. Cl.: B60T 13/74, B60T 17/22

(54) **A BRAKE SYSTEM FOR BRAKING A VEHICLE**
BREMSSYSTEM ZUM ABBREMSEN EINES FAHRZEUGS
UN SYSTÈME DE FREINAGE POUR FREINER UN VÉHICULE

(43) Date of publication of application: 27.07.2022
(73) Proprietor: Hitachi Astemo Netherlands B.V., 5301 LX Zaltbommel (NL)
(72) Inventor: OOSTHOEK, Bart, 5656 AG Eindhoven (NL); MARINOV, Asen-Antonov, 5656 AG Eindhoven (NL); WYLIE, Paul, 5656 AG Eindhoven (NL)
(74) Representative: V.O.

(56) References cited:
- WO-A1-2020/204509
- DE-A1- 102011 084 534
- DE-A1- 102018 222 794

## Description

### TECHNICAL FIELD AND BACKGROUND

The present invention relates to a brake system for braking a vehicle, and an automotive actuator, e.g. for braking a wheel as part of the brake system.

As background, DE 10 2018 222794 A1, DE 10 2011 084534 A1, and WO 2020/204509 A1 describe (parking) brake systems which can switch to a type of backup brake in case the main brake fails. Automotive Safety Integrity Level (ASIL) is a risk classification scheme defined by the ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements. There are four ASILs identified by the standard: ASIL A, ASIL B, ASIL C, ASIL D. ASIL D dictates the highest integrity requirements on the product and ASIL A the lowest. Hazards that are identified as "Quality Management" (QM) do not dictate any safety requirements. Under certain circumstances, the required ASIL classification of components can be lowered through a technique referred to as ASIL Decomposition. For example, a safety function implemented in an integrated device having high ASIL rating may be decomposed into independent sub-functions or components, with possibly lower ASIL. This can be advantageous, for example, with respect to improving system robustness and/or lowering production costs. However, it can be difficult to assure independent operation of the decomposed elements.

There is yet a need for an improved brake system and automotive actuator control which allows the use of cost-effective redundant circuits while maintaining the highest vehicle safety requirements.

### SUMMARY

The inventors find that, from the results of vehicle simulation analyses, the safety and stability of a vehicle can typically be ensured only with a fail operational concept and the use of expensive ASIL D compliant E/E Hardware components. So the use of redundant ASIL B components is typically not feasible without a special concept as this is not compliant to the ASIL D level diagnostic coverage and failure rate (especially to mitigate the random E/E Hw failures). As described herein, the Smart Brake Fail Operational Decomposed Actuator safety concept can achieve ASIL D requirements on system level with the use of lower complexity (ASIL B) E/E hardware components. According to a preferred embodiment, the Smart Brake Fail Operational Decomposed Actuator concept has two channels which both can be comprised of an ASIL B level control unit and inverter. According to the decomposition rules of the ISO 26262 standard this by itself may not fulfill the integrity of the transition to degraded mode (safe state) and the ASIL D diagnostic coverage and failure rate of the system. To compensate for this the present teachings provide an additional mechanism which can independently select a respective channel.

The invention provides a brake system for braking a vehicle. The brake system comprises a respective brake actuator controller, preferably at least one for each wheel. The respective brake actuator controller is configured to apply a respective power signal to power a respective brake actuation mechanism. The respective brake actuation mechanism can then apply an amount of braking to the wheel. In particular, this can be based at least on a respective actuator control signal received by the brake actuator controller. The brake system further comprises a central controller configured to control the braking of the vehicle. This can be done by sending the respective actuator control signal to the respective brake actuator controller of each wheel, e.g. based on a brake intent signal received by the central controller. As described herein each brake actuator controller comprises a main brake circuit configured to provide the power signal based on a first actuator control signal received from the central controller. Furthermore each brake actuator controller comprises a backup brake circuit configured to independently provide the power signal, in case the main brake circuit fails, based on a second actuator control signal received from the central controller. Advantageously, each brake actuator controller comprises a switching circuit. The switching circuit is configured to exclusively relay the power signal received from either the main brake circuit or the backup brake circuit to the brake actuation mechanism based on a switching signal received from the central controller independently of the actuator control signals. For example, the central controller can be classified as ASIL-D to reliably decide whether to switch between the main and backup circuits in the respective brake actuator controller, so the required classification of these independent circuits can be lower, e.g. ASIL-B.

The brake system according to the invention preferably comprises an automotive actuator for applying a force or torque in an automotive component, in particular a brake actuator for braking a wheel. The actuator comprises an actuation mechanism. For example, the actuation mechanism comprises a clamping device or other actuated device for applying an amount of braking to the wheel, e.g. by clamping a brake disc connected to the wheel. Furthermore, the actuation mechanism comprises or couples to an electric motor operably connected to the actuated device via a transmission. The automotive actuator further comprises an actuator controller, e.g. the brake actuator controller as described earlier. In particular, the actuator controller comprises a main circuit configured to provide a power signal to the electric motor based on a first actuator control signal received from a central controller via a main network port. Furthermore, the actuator controller comprises a backup circuit configured to independently provide the power signal, in case the main circuit fails, based on a second actuator control signal received from the central controller via a backup network port. Furthermore, the actuator controller comprises a switching circuit configured to exclusively relay the power signal received from either the main circuit or the backup circuit to the actuation mechanism based on a switching signal received independently of the actuator control signals via a signal port separate from the main and backup network ports.

### BRIEF DESCRIPTION OF DRAWINGS

These and other features, aspects, and advantages of the brake system of the present invention will become better understood from the following description, appended claims, and accompanying drawing wherein:
FIG 1 illustrates a vehicle with a brake system;
FIG 2 illustrates further details of a preferred brake system.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

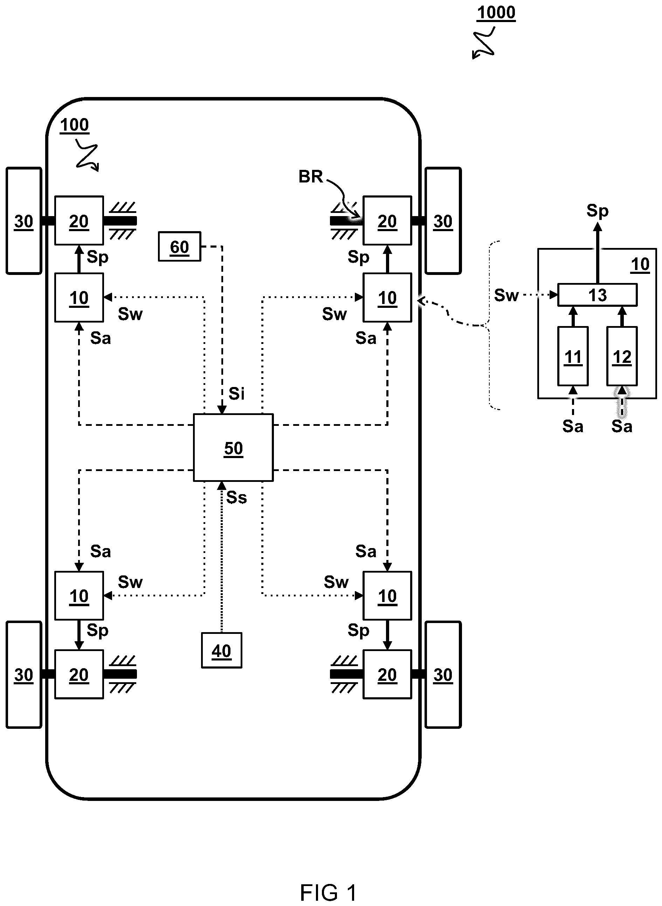

FIG 1 illustrates a vehicle 1000 with a brake system 100 for braking a vehicle 1000.

In some embodiments, e.g. as shown, the brake system comprises a respective brake actuator controller 10 for one or more wheels 30 of the vehicle 1000, preferably each wheel 30. In one embodiment, the brake actuator controller 10 is configured to apply a respective power signal "Sp" to power a respective brake actuation mechanism 20 for applying an amount of braking BR to the wheel 30. For example, this can be based at least on a respective actuator control signal "Sa" received by the brake actuator controller 10. In other or further embodiments, e.g. as shown, the brake system comprises a central controller 50. In one embodiment, the central controller 50 is configured to control the braking of the vehicle by sending the respective actuator control signal "Sa" to the respective brake actuator controller 10 of each wheel 30. For example, this can be based on a brake intent signal "Si" received by the central controller 50.

In some embodiments, each brake actuator controller 10 comprises at least a main brake circuit 11 and a backup brake circuit 12. In one embodiment, the main brake circuit 11 is configured to provide the power signal "Sp" based on a first actuator control signal "Sa", e.g. received from the central controller 50. In another or further embodiment, the backup brake circuit 12 is configured to (independently) provide the power signal "Sp", e.g. in case the main brake circuit 11 fails, based on a second actuator control signal "Sa" which can also be received from the central controller 50. In a preferred embodiment, the brake actuator controller 10 comprises a switching circuit 13 configured to exclusively relay the power signal "Sp" received from either the main brake circuit 11 or the backup brake circuit 12 to the brake actuation mechanism 20. Most preferably, this based on a switching signal "Sw" received independently of the actuator control signals Sa. For example, the switching signal "Sw" is also received from the central controller 50.

Aspects of the present invention can also be embodied as an integrated brake actuator for braking a wheel 30. For example, the brake actuator comprises the integrated components of the brake actuator controller 10 and brake actuation mechanism 20. In one embodiment, the brake actuation mechanism 20 comprises a clamping device 20c for applying an amount of braking BR to the wheel 30, e.g. by clamping a brake disc connected to the wheel 30, and an (electric) brake motor 20m operably connected to the clamping device 20c via a brake transmission 20t. In another or further embodiment, the brake actuator controller 10 comprises a main brake circuit 11, a backup brake circuit 12, and a switching circuit 13, as described herein. For example, the main brake circuit 11 is configured to provide a power signal "Sp" to the brake motor 10m based on a first actuator control signal "Sa" received from a central controller 50 via a main network port 51p. For example, the backup brake circuit 12 is configured to independently provide the power signal "Sp", in case the main brake circuit 11 fails, based on a second actuator control signal "Sa" received from the central controller 50 via a backup network port 52p. For example, the switching circuit 13 is configured to exclusively relay the power signal "Sp" received from either the main brake circuit 11 or the backup brake circuit 12 to the brake actuation mechanism 20 based on a switching signal "Sw" received independently of the actuator control signals Sa via a signal port 13p separate from the main and backup network ports 51p,52p.

An electric brake for a vehicle typically has an electromechanical actuation mechanism, configured to press a friction brake lining for braking against a brake body that is mounted to a vehicle wheel. The brake body, or rotor, is typically a brake disc or a brake drum. The actuation device typically has an electric motor and a rotation-to-translation conversion gear that converts a rotary driving motion of the electric motor into a translational motion for pressing the friction brake lining against the brake body. Worm gears, such as spindle gears or roller worm drives, are often used as rotation-to-translation conversion gears. It is also possible to convert the rotary motion into a translational motion by means of a pivotable cam, for instance. A step-down gear, for instance in the form of a planetary gear, is often placed between the electric motor and the rotation-to-translation conversion gear. Self-boosting electromechanical vehicle brakes have a self-booster that converts a frictional force, exerted by the rotating brake body against the friction brake lining that is pressed for braking against the brake body, into a contact pressure, which presses the friction brake lining against the brake body in addition to a contact pressure that is exerted by the actuation device. Wedge, ramp, and lever mechanisms are suitable for the self-boosting.

In some embodiments, the brake intent signal "Si" is generated based on user interaction with a service and/or parking brake 60, and/or generated autonomously by a vehicle motion control system (not shown). In one embodiment, the brake intent signal "Si" is received directly or indirectly from the service and/or parking brake 60. For example, the brake intent signal "Si" is generated when a brake pedal is operated. In another or further embodiment (not shown), the brake intent signal "Si" is generated autonomously by a motion controller of the vehicle. For example, the vehicle comprises a sensor system configured to detect impending danger and activate the brake system accordingly. So it will be understood that the brake system can also be operated as part of a partially or fully self-driving vehicle.

In some embodiments, the central controller 50 is configured to receive a sensor signal "Ss" from a motion sensor 40 measuring a motion of the vehicle and/or wheel 30. In one embodiment, the central controller 50 is configured to send the switching signal "Sw" to the switching circuit 13 for relaying the power signal "Sp" of the backup brake circuit 12 instead of the main brake circuit 11, or vice versa, based on the sensor signal "Ss". In another or further embodiment, the central controller 50 is configured to send the switching signal "Sw" to one or more brake actuator controllers 10 for switching the switching circuit 13, if the central controller 50 determines, based on the sensor signal "Ss", that the measured motion of the vehicle and/or wheel 30 deviates from an expected motion corresponding to the actuator control signal "Sa" and/or brake intent signal "Si".

In some embodiments, the motion sensor 40 comprises a wheel speed sensor configured to individually measure the wheel speed of each wheel of the vehicle. In one embodiment, the central controller 50 is configured to receive a respective wheel speed signal from each wheel 30. In another or further embodiment, the central controller 50 is configured to send the switching signal "Sw" for switching to the backup brake circuit 12 exclusively to the respective brake actuator controller 10 of the specific wheel. For example, the switching signal "Sw" is sent if it is determined that a measured wheel speed of a specific wheel deviates from an expected wheel speed corresponding to the actuator control signal "Sa" (that was sent to the respective brake actuator controller 10 of the specific wheel 30). In this way, only the faulty brake actuator controllers 10 of a specific wheel may need to be switched to its backup circuit, while the controllers of the other wheels can remain to use their main circuit.

In other or further embodiments, the motion sensor 40 comprises an inertial sensor configured to measure acceleration and/or deceleration of the vehicle. In one embodiment, the central controller 50 is configured to receive an acceleration and/or deceleration signal from the inertial sensor and send the switching signal "Sw" for switching each of the brake actuator controller 10 from the main brake circuit 11 to the backup brake circuit 12, or vice versa. For example, in case an overall braking behavior of the vehicle deviates from expected behavior, the problem may be immediately remedied by switching each of the brake actuator controller 10 to an alternate brake circuit 11. For example, this can alleviate braking problems even if it cannot be directly determined which specific controller has failed.

In some embodiments, the central controller 50 is configured to periodically test the backup brake circuit 12 by switching the brake actuator controller 10 to use the backup brake circuit 12 instead of main brake circuit 11 absent any detected failure in the brake system 100. In one embodiment, the central controller 50 is configured to periodically test the backup brake circuit 12 when the vehicle is parked by applying a parking brake using the backup brake circuit 12 and monitor subsequent motion of the vehicle and/or wheels. For example, when the vehicle or wheel starts moving after the brake is actuated using the backup brake circuit 12, this is an indication there is a fault in the backup brake circuit 12. By testing this during parking there is relatively low risk associated with the test.

In some embodiments, the central controller 50 is configured to output a warning signal if it is determined that either the main brake circuit 11 or backup brake circuit 12 fails expected operation. For example, the warning signal can be used to trigger a visual and/or auditory warning signal on a dashboard of the vehicle. In one embodiment, the central controller 50 is configured to switch operation of the vehicle to a degraded mode based on the warning signal. In another or further embodiment, operation of the vehicle is limited in the degraded mode compared to normal mode (when the brake system 100 is fully functional). For example, the maximum speed of the vehicle may be limited in the degraded mode.

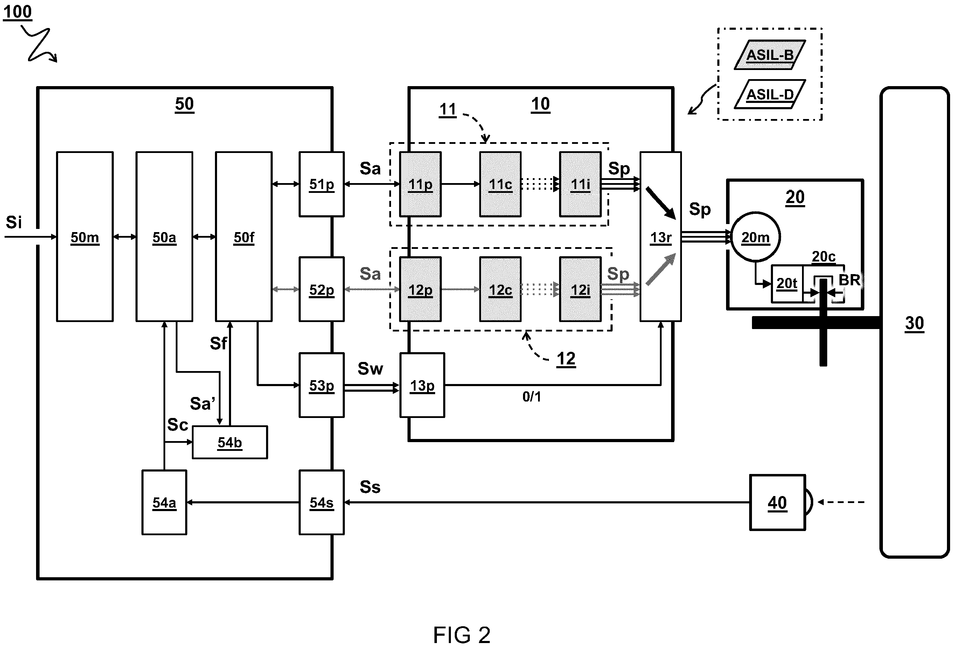

FIG 2 illustrates further details of a preferred components in a brake system 100.

In some embodiments, the central controller 50 is configured to communicate with each brake actuator controller 10 using a set of at least two separate parallel cables between the central controller 50 and respective brake actuator controller 10. For example, a first cable is configured to send the actuator control signal "Sa" to the main brake circuit 11 and a second cable is configured to send the actuator control signal "Sa" to the backup brake circuit 12. In one embodiment, the central controller 50 is configured to send the actuator control signal "Sa" using two or more network cables arranged in parallel between the central controller 50 and brake actuator controller 10. In another or further embodiment, the actuator control signal "Sa" is communicated using a message based protocol such as CAN or Ethernet. Such protocol can provide flexibility in communicating various types of information.

In a preferred embodiment, e.g. as shown, the central controller 50 is configured to communicate the switching signal "Sw" to each brake actuator controller 10 using at least one additional cable, e.g. separate from the set of at cables used for communicating the actuator control signal "Sa". In one embodiment, the actuator control signal "Sw" is communicated by applying a fixed voltage on a respective signal line. For example, the switching signal "Sw" can be simply communicated by switching between a high and low voltage, e.g. 5v and 0V, or any other voltage. Such way of communication can be relatively simple and robust so the chance of failure can be minimized. In one embodiment, the central controller 50 is configured to communicate the switching signal "Sw" to each brake actuator controller 10 using two signal lines. In another or further embodiment, the brake actuator controller 10 is configured to determine the switching signal "Sw" based on a combination of voltages received from the two signal lines. For example, in normal operation, an "on" or "high" voltage signal (1) is continuously provided on each of the signal lines. When both of the signals is switched to an "off' or "low" voltage (0) this can be used as an indication to operate the switching circuit 13. This redundancy may prevent inadvertent switching when one of the signal lines is broken. Of course also other combinations of signals can be used. By switching the switching circuit 13 using a limited number of signals, e.g. one or two bits, the chance of failure for such switching can be lowered. In principle also more than two, e.g. three, signal lines can be used for further redundancy.

In some embodiments, e.g. as shown, each brake circuit 11,12 comprises a separate set of components. In one embodiment, the set of components includes a network port 11p, 12p configured to receive a respective actuator control signal "Sa". In another or further embodiment, the set of components includes an inverter 11i, 12i configured to generate a respective power signal "Sp". In another or further embodiment, the set of components includes a brake actuator processor 11c, 12c configured to control the main brake circuit 11 to generate the power signal "Sp" based on the actuator control signal "Sa". In one embodiment, (the components of) the respective brake circuits 11,12 are classified as ASIL-B or ASIL-C. For example, the brake actuator processor 11c, 12c can be a relatively simple processor, e.g. single core as opposed to a dual-core lockstep processor which is typically needed for being rated as ASIL-D.

In some embodiments, the switching circuit 13 comprises a signal port 13p configured to receive the switching signal "Sw", e.g. one or more voltages. In other or further embodiments, the switching circuit 13 comprises a switching relay 13r controlled by the switching signal "Sw" to form an electrical connection between an output of a respective inverter 11i, 12i of either the main brake circuit 11 or the backup brake circuit 12. In a preferred embodiment, at least the components of the switching circuit 13 are classified as ASIL-D. As will be appreciated, the ASIL-D classification of the switching circuit 13 can be used to apply reliable ASIL decomposition of components in the brake actuator controller 10 by improved separation between the operation of the main and backup brake circuits, which can thus be of lower classification ASIL-B without compromising safety.

In some embodiments, e.g. as shown, the central controller 50 comprises at least one signal port 54s for receiving a sensor signal "Ss" from a motion sensor 40 measuring a motion of the vehicle and/or wheel 30. In one embodiment, the central controller 50 comprises a sensor signal acquisition unit 54a configured to generate a conditioned sensor signal "Sc" based on the sensor signal "Ss" received from the signal port 54s. In another or further embodiment, the central controller 50 comprises a black-box actuator safety unit 54b configured to generate a safety mechanism result Sf based on the conditioned sensor signal "Sc". The safety mechanism result Sf can also be based on an indication Sa' of the actuator control signal "Sa", e.g. to compare the measured brake behavior (based on the sensor signal "Ss") with the expected brake behavior (based on the indication Sa'). In another or further embodiment, the central controller 50 comprises an actuator control safety unit 50f. For example, the actuator control safety unit 50f is configured to generate the switching signal "Sw" based on the safety mechanism result Sf, and/or to selectively output the actuator control signal "Sa" to one of a main network port 51p and a backup network port 52p based on the safety mechanism result Sf. For example, these ports 51p,52p are connected to the respective network ports 11p,12p of the main and backup brake circuits 11,12.

In some embodiments, e.g. as shown, the central controller 50 comprises a brake system control module 50m configured to determine an individual brake intent for each wheel 30 based on the received brake intent signal "Si". The brake system control module 50m may also include other considerations, e.g. other sensor inputs. For example, the brake system control module 50m may implement an anti-lock braking system (ABS), electronic stability control (ESC), or other traction control. In one embodiment, the central controller 50 comprises an actuator control module 50a configured to individually generate a respective actuator control signal "Sa" for each wheel based on the individual brake intent signal. In another or further embodiment, the actuator control module 50a is configured to generate the generate a respective actuator control signal "Sa" for each wheel further based on a (conditioned) sensor signal "Sc" indicating a motion of the wheel.

Preferably, the central controller 50 is classified as ASIL-D. For example, the central controller 50 comprises a dual core lockstep processor. By providing the highly reliable central controller 50 with the decision function whether to use the main brake circuit 11 or the backup brake circuit 12 in each of the brake actuator controllers 10, the overall chance of failure is further lowered. Typically, the units and modules as described herein with reference to the central controller 50 can be implemented in hardware and/or software components. While the functions are depicted as separate blocks, these blocks or functions can also be integrated, further subdivided, or omitted (e.g. because their respective function is not strictly necessary). For example, the functions of the brake system control module 50m and the actuator control module 50a can be combined. For example, the functions of the black-box actuator safety unit 54b can be integrated in the actuator control safety unit 50f and can also be made part of the brake system control module 50a. For example, the sensor signal acquisition unit 54a may be omitted and the sensor signal "Ss" directly input into the black-box actuator safety unit 54b and/or actuator control safety unit 50f. Also other variation will be apparent to the skilled person having the benefit of the present teachings. While it is recognized that the present teachings are especially beneficial in the control of a brake system, in principle the present teachings can also be applied to other automotive components that benefit from reliable control, in particular allowing the use of cost-effective redundant circuits while maintaining the highest vehicle safety requirements.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

### LIST OF REFERENCE SIGNS

brake actuator controller (10), main brake circuit (11), backup brake circuit (12), network ports (11p, 12p), brake actuator processors (11c, 12c), inverters (11i, 12i), switching circuit (13), signal port (13p), switching relay (13r); brake actuation mechanism (20), brake motor (20m), clamping device (20c); wheel (30); sensor (40); central controller (50), brake system control module (50m), actuator control module (50a), actuator control safety unit (50f), network ports (51p,52p), switching signal port (53p), sensor signal port (54s), sensor signal acquisition unit (54a), black-box actuator safety unit (54b); brake action (BR), actuator control signal (Sa), brake intent signal (Si), switching signal (Sw), sensor signal (Ss).

## Claims

1. A brake system (100) for braking a vehicle (1000), the brake system comprising
for at least one, preferably each, wheel (30) of the vehicle, a respective brake actuator controller (10) configured to apply a respective power signal (Sp) to power a respective brake actuation mechanism (20) for applying an amount of braking (BR) to the wheel (30) based at least on a respective actuator control signal (Sa) received by the brake actuator controller (10);
a central controller (50) configured to control the braking of the vehicle by sending the respective actuator control signal (Sa) to each respective brake actuator controller (10) based on a brake intent signal (Si) received by the central controller (50);
wherein each brake actuator controller (10) comprises
a main brake circuit (11) configured to provide the power signal (Sp) based on a first actuator control signal (Sa) received from the central controller (50),
a backup brake circuit (12) configured to provide the power signal (Sp), in case the main brake circuit (11) fails, and
a switching circuit (13) configured to exclusively relay the power signal (Sp) received from either the main brake circuit (11) or the backup brake circuit (12) to the brake actuation mechanism (20)
**characterised in that**
the backup brake circuit (12) is configured to independently provide the power signal (Sp) based on a second actuator control signal (Sa) received from the central controller (50), and
the switching circuit (13) is configured to relay the power signal (Sp) based on a switching signal (Sw) received from the central controller (50) independently of the actuator control signals (Sa).

2. The brake system according to the preceding claim, wherein the central controller (50) is configured to receive a sensor signal (Ss) from a motion sensor (40) measuring a motion of the vehicle and/or wheel (30), wherein the central controller (50) is configured to send the switching signal (Sw) to the switching circuit (13) for relaying the power signal (Sp) of the backup brake circuit (12) instead of the main brake circuit (11), or vice versa, based on the sensor signal (Ss).

3. The brake system according to the preceding claim, wherein the central controller (50) is configured to send the switching signal (Sw) to one or more brake actuator controllers (10) for switching the switching circuit (13), if the central controller (50) determines, based on the sensor signal (Ss), that the measured motion of the vehicle and/or wheel (30) deviates from an expected motion corresponding to the actuator control signal (Sa) and/or brake intent signal (Si).

4. The brake system according to the preceding claim, wherein the motion sensor (40) comprises a wheel speed sensor configured to individually measure the wheel speed of each wheel of the vehicle, wherein the central controller (50) is configured to receive a respective wheel speed signal from each wheel (30) and, if it is determined that a measured wheel speed of a specific wheel deviates from an expected wheel speed corresponding to the actuator control signal (Sa), that was sent to the respective brake actuator controller (10) of the specific wheel (30), send the switching signal (Sw) for switching to the backup brake circuit (12) exclusively to the respective brake actuator controller (10) of the specific wheel.

5. The brake system according to any of claims 2 - 4, wherein the motion sensor (40) comprises an inertial sensor configured to measure acceleration and/or deceleration of the vehicle, wherein the central controller (50) is configured to receive an acceleration and/or deceleration signal from the inertial sensor and send the switching signal (Sw) for switching each of the brake actuator controller (10) from the main brake circuit (11) to the backup brake circuit (12), or vice versa.

6. The brake system according to any of the preceding claims, wherein each brake circuit (11,12) comprises a separate set of components including
a network port (11p, 12p) configured to receive a respective actuator control signal (Sa),
an inverter (11i, 12i) configured to generate a respective power signal (Sp), and
a brake actuator processor (11c, 12c) configured to control the main brake circuit (11) to generate the power signal (Sp) based on the actuator control signal (Sa).
wherein the components of the respective brake circuits (11,12) are classified as ASIL-B or ASIL-C.

7. The brake system according to any of the preceding claims, wherein the switching circuit (13) comprises components including
a signal port (13p) configured to receive the switching signal (Sw), e.g. one or more voltages, and
a switching relay (13r) controlled by the switching signal (Sw) to form an electrical connection between an output of a respective inverter (11i, 12i) of either the main brake circuit (11) or the backup brake circuit (12).
wherein the components of the switching circuit (13) and the central controller (50) are classified as ASIL-D.

8. The brake system according to any of the preceding claims, wherein the brake intent signal (Si) is generated based on user interaction with a service and/or parking brake (60), and/or generated autonomously by a vehicle motion control system.

9. The brake system according to any of the preceding claims, wherein the central controller (50) is configured to communicate with each brake actuator controller (10) using a set of at least two separate network cables arranged in parallel between the central controller (50) and respective brake actuator controller (10), wherein a first network cable is configured to send the actuator control signal (Sa) to the main brake circuit (11) and a second network cable is configured to send the actuator control signal (Sa) to the backup brake circuit (12), wherein the actuator control signal (Sa) is communicated using a message based protocol such as CAN or Ethernet, wherein the central controller (50) is configured to communicate the switching signal (Sw) to each brake actuator controller (10) using at least one additional cable, separate from the set of network cables used for communicating the actuator control signal (Sa), wherein the switching signal (Sw) is communicated by applying a fixed voltage on a respective signal line.

10. The brake system according to any of the preceding claims, wherein the central controller (50) is configured to communicate the switching signal (Sw) to each brake actuator controller (10) using two signal lines, wherein the brake actuator controller (10) is configured to determine the switching signal (Sw) based on a combination of voltages received from the two signal lines.

11. The brake system according to any of the preceding claims, wherein the central controller (50) is configured to periodically test the backup brake circuit (12) by switching the brake actuator controller (10) to use the backup brake circuit (12) instead of main brake circuit (11) absent any detected failure in the brake system (100).

12. The brake system according to any of the preceding claims, wherein the central controller (50) is configured to output a warning signal if it is determined that either the main brake circuit (11) or backup brake circuit (12) fails expected operation, wherein the central controller (50) is configured to switch operation of the vehicle to a degraded mode based on the warning signal.

13. The brake system according to any of the preceding claims, wherein the central controller (50) comprises
at least one signal port (54s) for receiving a sensor signal (Ss) from a motion sensor (40) measuring a motion of the vehicle and/or wheel (30);
a sensor signal acquisition unit (54a) configured to generate a conditioned sensor signal (Sc) based on the sensor signal (Ss) received from the signal port (54s);
a black-box actuator safety unit (54b) configured to generate a safety mechanism result (Sf) based on the conditioned sensor signal (Sc), and an indication (Sa') of actuator control signal (Sa);
an actuator control safety unit (50f) configured to
generate the switching signal (Sw) based on the safety mechanism result (Sf), and
to selectively output the actuator control signal (Sa) to one of a main network port (51p) and a backup network port (52p), connected to the respective network ports (11p, 12p) of the main and backup brake circuits (11,12), based on the safety mechanism result (Sf);
a brake system control module (50m) configured to determine an individual brake intent for each wheel (30) based on the received brake intent signal (Si); and
an actuator control module (50a) configured to individually generate a respective actuator control signal (Sa) for each wheel based on the individual brake intent signal.

14. The brake system according to any of the preceding claims, comprising an automotive actuator for applying a force or torque in an automotive component, in particular a brake actuator for braking a wheel, the automotive actuator comprising
an actuation mechanism (20) comprising
an actuated device (20c) for applying an amount of force or torque, and
an electric motor (20m) operably connected to the actuated device (20c) via a transmission (20t); and
an actuator controller (10) comprising
a main circuit (11) configured to provide a power signal (Sp) to the electric motor (20m) based on a first actuator control signal (Sa) received from a central controller (50) via a main network port (51p),
a backup circuit (12) configured to independently provide the power signal (Sp), in case the main circuit (11) fails, based on a second actuator control signal (Sa) received from the central controller (50) via a backup network port (52p), and
a switching circuit (13) configured to exclusively relay the power signal (Sp) received from either the main circuit (11) or the backup circuit (12) to the actuation mechanism (20) based on a switching signal (Sw) received independently of the actuator control signals (Sa) via a signal port (13p) separate from the main and backup network ports (51p,52p).

15. The brake system according to the preceding claim wherein the automotive actuator is configured as a brake actuator for braking a wheel (30), wherein the actuator controller (10) is configured to apply a respective power signal (Sp) to power the actuation mechanism (20), e.g. including a clamping device configured to clamp a brake disc connected to the wheel (30), for applying an amount of braking (BR) to the wheel (30) based at least on the respective actuator control signal (Sa) and the switching signal (Sw) received by the actuator controller (10).

## Patentansprüche

1. Bremssystem (100) zum Bremsen eines Fahrzeugs (1000), wobei das Bremssystem Folgendes umfasst
für mindestens ein, vorzugsweise jedes, Rad (30) des Fahrzeugs eine entsprechende Bremsaktuatorsteuerung (10), die dazu konfiguriert ist, ein entsprechendes Leistungssignal (Sp) anzulegen, um einen entsprechenden Bremsbetätigungsmechanismus (20) mit Energie zu versorgen, um eine Bremsmenge (BR) auf das Rad (30) auszuüben, basierend zumindest auf einem entsprechenden Aktuatorsteuersignal (Sa), das von der Bremsaktuatorsteuerung (10) empfangen wird;
eine zentrale Steuerung (50), die dazu konfiguriert ist, das Bremsen des Fahrzeugs zu steuern, indem sie das entsprechende Aktuatorsteuersignal (Sa) an jede entsprechende Bremsaktuatorsteuerung (10) basierend auf einem von der zentralen Steuerung (50) empfangenen Bremsabsichtssignal (Si) sendet;
wobei jede Bremsaktuatorsteuerung (10) Folgendes umfasst
einen Hauptbremskreis (11), der dazu konfiguriert ist, das Leistungssignal (Sp) basierend auf einem ersten Aktuatorsteuersignal (Sa) bereitzustellen, das von der zentralen Steuerung (50) empfangen wird,
einen Reservebremskreis (12), der dazu konfiguriert ist, das Leistungssignal (Sp) bereitzustellen, falls der Hauptbremskreis (11) ausfällt,
und einen Schaltkreis (13), der dazu konfiguriert ist, ausschließlich das entweder von dem Hauptbremskreis (11) oder von dem Reservebremskreis (12) empfangene Leistungssignal (Sp) an den Bremsbetätigungsmechanismus (20) weiterzuleiten,
**dadurch gekennzeichnet, dass**
der Reservebremskreis (12) dazu konfiguriert ist, das Leistungssignal (Sp) basierend auf einem zweiten Aktuatorsteuersignal (Sa), das von der zentralen Steuerung (50) empfangen wird, unabhängig bereitzustellen, und
der Schaltkreis (13) dazu konfiguriert ist, das Leistungssignal (Sp) weiterzuleiten, basierend auf einem von der zentralen Steuerung (50) empfangenen Schaltsignal (Sw) unabhängig von den Aktuatorsteuersignalen (Sa).

2. Bremssystem nach dem vorstehenden Anspruch, wobei die zentrale Steuerung (50) dazu konfiguriert ist, ein Sensorsignal (Ss) von einem Bewegungssensor (40) zum Messen einer Bewegung des Fahrzeugs und/oder des Rads (30) zu empfangen,
wobei die zentrale Steuerung (50) dazu konfiguriert ist, das Schaltsignal (Sw) an den Schaltkreis (13) zu senden, um das Leistungssignal (Sp) des Reservebremskreises (12) anstelle des Hauptbremskreises (11) oder umgekehrt basierend auf dem Sensorsignal (Ss) weiterzuleiten.

3. Bremssystem nach dem vorstehenden Anspruch, wobei die zentrale Steuerung (50) dazu konfiguriert ist, das Schaltsignal (Sw) an eine oder mehrere Bremsaktuatorsteuerungen (10) zum Schalten des Schaltkreises (13) zu senden, wenn die zentrale Steuerung (50) basierend auf dem Sensorsignal (Ss) bestimmt, dass die gemessene Bewegung des Fahrzeugs und/oder Rads (30) von einer erwarteten Bewegung entsprechend dem Aktuatorsteuersignal (Sa) und/oder dem Bremsabsichtssignal (Si) abweicht.

4. Bremssystem nach dem vorstehenden Anspruch, wobei der Bewegungssensor (40) einen Raddrehzahlsensor umfasst, der dazu konfiguriert ist, die Raddrehzahl jedes Rades des Fahrzeugs individuell zu messen, wobei die zentrale Steuerung (50) dazu konfiguriert ist, ein entsprechendes Raddrehzahlsignal von jedem Rad (30) zu empfangen und, wenn bestimmt wird, dass eine gemessene Raddrehzahl eines bestimmten Rads von einer erwarteten Raddrehzahl entsprechend dem Aktuatorsteuersignal (Sa) abweicht, das an die entsprechende Bremsaktuatorsteuerung (10) des spezifischen Rads (30) gesendet wurde, das Schaltsignal (Sw) zum Umschalten auf den Reservebremskreis (12) ausschließlich an die entsprechende Bremsaktuatorsteuerung (10) des spezifischen Rads zu senden.

5. Bremssystem nach einem der Ansprüche 2 bis 4, wobei der Bewegungssensor (40) einen Inertialsensor umfasst, der zum Messen der Beschleunigung und/oder Verzögerung des Fahrzeugs konfiguriert ist, wobei die zentrale Steuerung (50) dazu konfiguriert ist, ein Beschleunigungs- und/oder ein Verzögerungssignal von dem Inertialsensor zu empfangen und das Schaltsignal (Sw) zum Umschalten jeder der Bremsaktuatorsteuerungen (10) von dem Hauptbremskreis (11) zu dem Reservebremskreis (12) oder umgekehrt zu senden.

6. Bremssystem nach einem der vorstehenden Ansprüche, wobei jeder Bremskreis (11, 12) einen separaten Satz von Komponenten umfasst, die Folgendes enthalten
einen Netzwerkanschluss (11p, 12p), der zum Empfangen eines entsprechenden Aktuatorsteuersignals (Sa) konfiguriert ist,
einen Wechselrichter (11i, 12i), der zum Erzeugen eines entsprechenden Leistungssignals (Sp) konfiguriert ist, und
einen Bremsaktuatorprozessor (11c, 12c), der zum Steuern des Hauptbremskreises (11) konfiguriert ist, um das Leistungssignal (Sp) basierend auf dem Aktuatorsteuersignal (Sa) zu erzeugen;
wobei die Komponenten der entsprechenden Bremskreise (11, 12) als ASIL-B oder ASIL-C klassifiziert sind.

7. Bremssystem nach einem der vorstehenden Ansprüche, wobei der Schaltkreis (13) Komponenten umfasst, die Folgendes enthalten
einen Signalanschluss (13p), der zum Empfangen des Schaltsignals (Sw), z. B. einer oder mehrerer Spannungen, konfiguriert ist, und
ein Schaltrelais (13r), das durch das Schaltsignal (Sw) gesteuert wird, um eine elektrische Verbindung zwischen einem Ausgang eines entsprechenden Wechselrichters (11i, 12i) entweder des Hauptbremskreises (11) oder des Reservebremskreises (12) herzustellen;
wobei die Komponenten des Schaltkreises (13) und der zentralen Steuerung (50) als ASIL-D klassifiziert sind.

8. Bremssystem nach einem der vorstehenden Ansprüche, wobei das Bremsabsichtssignal (Si) basierend auf einer Benutzerinteraktion mit einer Betriebs- und/oder Feststellbremse (60) und/oder autonom durch ein Fahrzeugbewegungssteuerungssystem erzeugt wird.

9. Bremssystem nach einem der vorstehenden Ansprüche, wobei die zentrale Steuerung (50) dazu konfiguriert ist, mit jeder Bremsaktuatorsteuerung (10) unter Verwendung eines Satzes von mindestens zwei separaten Netzwerkkabeln zu kommunizieren, die parallel zwischen der zentralen Steuerung (50) und der entsprechenden Bremsaktuatorsteuerung (10) angeordnet sind, wobei ein erstes Netzwerkkabel dazu konfiguriert ist, das Aktuatorsteuersignal (Sa) an den Hauptbremskreis (11) zu senden, und ein zweites Netzwerkkabel dazu konfiguriert ist, das Aktuatorsteuersignal (Sa) an den Reservebremskreis (12) zu senden, wobei das Aktuatorsteuersignal (Sa) unter Verwendung eines nachrichtenbasierten Protokolls wie CAN oder Ethernet übertragen wird, wobei die zentrale Steuerung (50) dazu konfiguriert ist, das Schaltsignal (Sw) an jede Bremsaktuatorsteuerung (10) unter Verwendung mindestens eines zusätzlichen Kabels zu übertragen, das von dem Satz von Netzwerkkabeln getrennt ist, die für die Übertragung des Aktuatorsteuersignals (Sa) verwendet werden, wobei das Schaltsignal (Sw) durch Anlegen einer festen Spannung an eine entsprechende Signalleitung übertragen wird.

10. Bremssystem nach einem der vorstehenden Ansprüche, wobei die zentrale Steuerung (50) dazu konfiguriert ist, das Schaltsignal (Sw) an jede Bremsaktuatorsteuerung (10) unter Verwendung von zwei Signalleitungen zu übertragen, wobei die Bremsaktuatorsteuerung (10) dazu konfiguriert ist, das Schaltsignal (Sw) basierend auf einer Kombination von Spannungen zu bestimmen, die von den zwei Signalleitungen empfangen werden.

11. Bremssystem nach einem der vorstehenden Ansprüche, wobei die zentrale Steuerung (50) dazu konfiguriert ist, den Reservebremskreis (12) periodisch zu testen, indem die Bremsaktuatorsteuerung (10) so geschaltet wird, dass sie den Reservebremskreis (12) anstelle des Hauptbremskreises (11) verwendet, ohne dass ein Fehler in dem Bremssystem (100) festgestellt wird.

12. Bremssystem nach einem der vorstehenden Ansprüche, wobei die zentrale Steuerung (50) dazu konfiguriert ist, ein Warnsignal auszugeben, wenn bestimmt wird, dass entweder der Hauptbremskreis (11) oder der Reservebremskreis (12) nicht erwartungsgemäß funktioniert, wobei die zentrale Steuerung (50) dazu konfiguriert ist, den Betrieb des Fahrzeugs basierend auf dem Warnsignal in einen herabgesetzten Modus zu schalten.

13. Bremssystem nach einem der vorstehenden Ansprüche, wobei die zentrale Steuerung (50) Folgendes umfasst
mindestens einen Signalanschluss (54s) zum Empfangen eines Sensorsignals (Ss) von einem Bewegungssensor (40), der eine Bewegung des Fahrzeugs und/oder Rads (30) misst;
eine Sensorsignalerfassungseinheit (54a), die dazu konfiguriert ist, ein aufbereitetes Sensorsignal (Sc) basierend auf dem von dem Signalanschluss (54s) empfangenen Sensorsignal (Ss) zu erzeugen;
eine Blackbox-Aktuatorsicherheitseinheit (54b), die dazu konfiguriert ist, ein Sicherheitsmechanismusergebnis (Sf) basierend auf dem aufbereiteten Sensorsignal (Sc) und eine Angabe (Sa') eines Aktuatorsteuersignals (Sa) zu erzeugen;
eine Aktuatorsteuersicherheitseinheit (50f), die dazu konfiguriert ist,
das Schaltsignal (Sw) basierend auf dem Sicherheitsmechanismusergebnis (Sf) zu erzeugen und
das Aktuatorsteuersignal (Sa) selektiv an einen von einem Hauptnetzwerkanschluss (51p) und einem Reservenetzwerkanschluss (52p), die mit den entsprechenden Netzwerkanschlüssen (11p, 12p) der Haupt- und Reservebremskreise (11, 12) verbunden sind, basierend auf dem Sicherheitsmechanismusergebnis (Sf) auszugeben; ein Bremssystemsteuermodul (50m), das dazu konfiguriert ist, basierend auf dem empfangenen Bremsabsichtssignal (Si) eine individuelle Bremsabsicht für jedes Rad (30) zu bestimmen; und
ein Aktuatorsteuermodul (50a), das dazu konfiguriert ist, individuell ein entsprechendes Aktuatorsteuersignal (Sa) für jedes Rad basierend auf dem individuellen Bremsabsichtssignal zu erzeugen.

14. Bremssystem nach einem der vorstehenden Ansprüche, umfassend einen Kraftfahrzeugaktuator zum Aufbringen einer Kraft oder eines Drehmoments in einer Kraftfahrzeugkomponente, insbesondere einen Bremsaktuator zum Bremsen eines Rads, wobei der Kraftfahrzeugaktuator Folgendes umfasst
einen Betätigungsmechanismus (20) umfassend
eine ausgelöste Vorrichtung (20c) zum Aufbringen einer Menge an Kraft oder Drehmoment und
einen Elektromotor (20m), der über ein Getriebe (20t) mit der ausgelösten Vorrichtung (20c) betriebsfähig verbunden ist; und
eine Aktuatorsteuerung (10) umfassend
einen Hauptschaltkreis (11), der dazu konfiguriert ist, ein Leistungssignal (Sp) für den Elektromotor (20m) basierend auf einem ersten Aktuatorsteuersignal (Sa) bereitzustellen, das von einer zentralen Steuerung (50) über einen Hauptnetzwerkanschluss (51p) empfangen wird,
einen Reserveschaltkreis (12), der dazu konfiguriert ist, das Leistungssignal (Sp) unabhängig bereitzustellen, falls der Hauptschaltkreis (11) ausfällt, basierend auf einem zweiten Aktuatorsteuersignal (Sa), das von der zentralen Steuerung (50) über einen Reservenetzwerkanschluss (52p) empfangen wird, und
einen Schaltkreis (13), der dazu konfiguriert ist, das von entweder dem Hauptschaltkreis (11) oder dem Reserveschaltkreis (12) empfangene Leistungssignal (Sp) an den Betätigungsmechanismus (20) basierend auf einem Schaltsignal (Sw) weiterzuleiten, das unabhängig von den Aktuatorsteuersignalen (Sa) über einen Signalanschluss (13p) getrennt von den Haupt- und Reservenetzwerkanschlüssen (51p, 52p) empfangen wird.

15. Bremssystem nach dem vorstehenden Anspruch, wobei der Kraftfahrzeugaktuator als ein Bremsaktuator zum Bremsen eines Rades (30) konfiguriert ist, wobei die Aktuatorsteuerung (10) dazu konfiguriert ist, ein entsprechendes Leistungssignal (Sp) anzulegen, um den Betätigungsmechanismus (20) mit Leistung zu versorgen, der z. B. eine Klemmvorrichtung enthält, die dazu konfiguriert ist, eine mit dem Rad (30) verbundene Bremsscheibe festzuklemmen, um eine Bremsmenge (BR) auf das Rad (30) auszuüben, basierend zumindest auf dem entsprechenden Aktuatorsteuersignal (Sa) und dem Schaltsignal (Sw), das von der Aktuatorsteuerung (10) empfangen wird.

## Revendications

1. Système de freinage (100) pour freiner un véhicule (1000), le système de freinage comprenant
pour au moins une, de préférence chaque roue (30) du véhicule, un contrôleur d'actionneur de frein respectif (10) configuré pour appliquer un signal de puissance respectif (Sp) pour alimenter un mécanisme d'actionnement de frein respectif (20) pour appliquer une quantité de freinage (BR) à la roue (30) sur la base au moins d'un signal de commande d'actionneur respectif (Sa) reçu par le contrôleur d'actionneur de frein (10);
un contrôleur central (50) configuré pour contrôler le freinage du véhicule en envoyant le signal de contrôle d'actionneur respectif (Sa) à chaque contrôleur d'actionneur de frein respectif (10) sur la base d'un signal d'intention de freinage (Si) reçu par le contrôleur central (50);
dans lequel chaque contrôleur d'actionneur de frein (10) comprend
un circuit de frein principal (11) configuré pour fournir le signal de puissance (Sp) sur la base d'un premier signal de commande d'actionneur (Sa) reçu du contrôleur central (50),
un circuit de freinage de secours (12) configuré pour fournir le signal de puissance (Sp), en cas de panne du circuit de freinage principal (11), et
un circuit de commutation (13) configuré pour relayer exclusivement le signal de puissance (Sp) reçu soit du circuit de frein principal (11) soit du circuit de frein de secours (12) au mécanisme d'actionnement de frein (20)
**caractérisé en ce que**
le circuit de freinage de secours (12) est configuré pour fournir indépendamment le signal de puissance (Sp), sur la base d'un deuxième signal de commande d'actionneur (Sa) reçu du contrôleur central (50), et
le circuit de commutation (13) est configuré pour relayer le signal de puissance (Sp) sur la base d'un signal de commutation (Sw) reçu indépendamment des signaux de commande d'actionneur (Sa).

2. Système de freinage selon la revendication précédente, dans lequel le contrôleur central (50) est configuré pour recevoir un signal de capteur (Ss) d'un capteur de mouvement (40) mesurant un mouvement du véhicule et/ou de la roue (30), dans lequel le contrôleur central (50) est configuré pour envoyer le signal de commutation (Sw) au circuit de commutation (13) pour relayer le signal de puissance (Sp) du circuit de freinage de secours (12) à la place du circuit de freinage principal (11), ou vice versa, sur la base du signal de capteur (Ss).

3. Système de freinage selon la revendication précédente, dans lequel le contrôleur central (50) est configuré pour envoyer le signal de commutation (Sw) à une ou plusieurs contrôleurs d'actionneur de frein (10) pour commuter le circuit de commutation (13), si le contrôleur central (50) détermine, sur la base du signal de capteur (Ss), que le mouvement mesuré du véhicule et/ou de la roue (30) dévie d'un mouvement attendu correspondant au signal de commande d'actionneur (Sa) et/ou au signal d'intention de freinage (Si).

4. Système de freinage selon la revendication précédente, dans lequel le capteur de mouvement (40) comprend un capteur de vitesse de roue configuré pour mesurer individuellement la vitesse de roue de chaque roue du véhicule, dans lequel le contrôleur central (50) est configuré pour recevoir un signal de vitesse de roue respectif de chaque roue (30) et, s'il est déterminé qu'une vitesse de roue mesurée d'une roue spécifique dévie d'une vitesse de roue attendue correspondant au signal de commande d'actionneur (Sa), qui a été envoyé au contrôleur d'actionneur de frein (10) respectif de la roue spécifique (30), envoyer le signal de commutation (Sw) pour commuter au circuit de frein de secours (12) exclusivement au contrôleur d'actionneur de frein (10) respectif de la roue spécifique.

5. Système de freinage selon l'une quelconque des revendications 2 à 4, dans lequel le capteur de mouvement (40) comprend un capteur inertiel configuré pour mesurer l'accélération et/ou la décélération du véhicule, dans lequel le contrôleur central (50) est configuré pour recevoir un signal d'accélération et/ou de décélération du capteur inertiel et envoyer le signal de commutation (Sw) pour commuter chacun du contrôleur d'actionneur de frein (10) du circuit de frein principal (11) au circuit de frein de secours (12), ou vice versa.

6. Système de freinage selon l'une quelconque des revendications précédentes, dans lequel chaque circuit de freinage (11, 12) comprend un ensemble séparé de composants incluant
un port réseau (11p, 12p) configuré pour recevoir un signal de commande d'actionneur respectif (Sa),
un inverseur (111, 121) configuré pour générer un signal de puissance respectif (Sp), et
un processeur d'actionneur de frein (11c, 12c) configuré pour commander le circuit de frein principal (11) pour générer le signal de puissance (Sp) sur la base du signal de commande d'actionneur (Sa).
dans lequel les composants des circuits de freinage respectifs (11, 12) sont classés comme ASIL-B ou ASIL-C.

7. Système de freinage selon l'une quelconque des revendications précédentes, dans lequel le circuit de commutation (13) comprend des composants comprenant
un port de signal (13p) configuré pour recevoir le signal de commutation (Sw), par exemple une ou plusieurs tensions, et
un relais de commutation (13r) commandé par le signal de commutation (Sw) pour former une connexion électrique entre une sortie d'un inverseur respectif (111, 121) soit du circuit de frein principal (11) soit du circuit de frein de secours (12),
dans lequel les composants du circuit de commutation (13) et du contrôleur central (50) sont classés comme ASIL-D.

8. Système de freinage selon l'une quelconque des revendications précédentes, dans lequel le signal d'intention de freinage (Si) est généré sur la base d'une interaction d'utilisateur avec un frein de service et/ou de stationnement (60), et/ou généré de manière autonome par un système de commande de mouvement de véhicule.

9. Système de freinage selon l'une quelconque des revendications précédentes, dans lequel le contrôleur central (50) est configuré pour communiquer avec chaque contrôleur d'actionneur de frein (10) en utilisant un ensemble d'au moins deux câbles de réseau séparés agencés en parallèle entre le contrôleur central (50) et le contrôleur d'actionneur de frein (10) respectif, dans lequel un premier câble de réseau est configuré pour envoyer le signal de commande d'actionneur (Sa) au circuit de frein principal (11) et un second câble de réseau est configuré pour envoyer le signal de commande d'actionneur (Sa) au circuit de frein de secours (12), dans lequel le signal de commande d'actionneur (Sa) est communiqué en utilisant un protocole basé sur message tel que CAN ou Ethernet, dans lequel le contrôleur central (50) est configuré pour communiquer le signal de commutation (Sw) à chaque contrôleur d'actionneur de frein (10) en utilisant au moins un câble supplémentaire, séparé de l'ensemble de câbles de réseau utilisés pour communiquer le signal de commande d'actionneur (Sa), dans lequel le signal de commande de commutation (Sw) est communiqué en appliquant une tension fixe sur une ligne de signal respective.

10. Système de freinage selon l'une quelconque des revendications précédentes, dans lequel le contrôleur central (50) est configuré pour communiquer le signal de commutation (Sw) à chaque contrôleur d'actionneur de frein (10) en utilisant deux lignes de signal, dans lequel le contrôleur d'actionneur de frein (10) est configuré pour déterminer le signal de commutation (Sw) sur la base d'une combinaison de tensions reçues des deux lignes de signal.

11. Système de freinage selon l'une quelconque des revendications précédentes, dans lequel le contrôleur central (50) est configuré pour tester périodiquement le circuit de freinage de secours (12) en commutant le contrôleur d'actionneur de frein (10) pour utiliser le circuit de freinage de secours (12) au lieu du circuit de freinage principal (11) en l'absence de toute défaillance détectée dans le système de freinage (100).

12. Système de freinage selon l'une quelconque des revendications précédentes, dans lequel le contrôleur central (50) est configuré pour délivrer un signal d'avertissement s'il est déterminé que soit le circuit de freinage principal (11) soit le circuit de freinage de secours (12) échoue à un fonctionnement attendu, dans lequel le contrôleur central (50) est configuré pour commuter le fonctionnement du véhicule dans un mode dégradé sur la base du signal d'avertissement.

13. Système de freinage selon l'une quelconque des revendications précédentes, dans lequel le contrôleur central (50) comprend
au moins un port de signal (54s) pour recevoir un signal de capteur (Ss) d'un capteur de mouvement (40) mesurant un mouvement du véhicule et/ou de la roue (30);
une unité d'acquisition de signal de capteur (54a) configurée pour générer un signal de capteur conditionné (Sc) sur la base du signal de capteur (Ss) reçu du port de signal (54s);
une unité de sécurité d'actionneur de boîte noire (54b) configurée pour générer un résultat de mécanisme de sécurité (S1) sur la base du signal de capteur conditionné (Sc), et une indication (Sa') du signal de commande d'actionneur (Sa);
une unité de sécurité de commande d'actionneur (50f) configurée pour :
générer le signal de commutation (Sw) sur la base du résultat du mécanisme de sécurité (Sf), et
sortir sélectivement le signal de commande d'actionneur (Sa) vers l'un d'un port de réseau principal (51p) et d'un port de réseau de secours (52p), connecté aux ports de réseau respectifs (11p, 12p) des circuits de frein principal et de secours (11, 12), sur la base du résultat de mécanisme de sécurité (Sf),
un module de commande de système de freinage (50m) configuré pour déterminer une intention de freinage individuelle pour chaque roue (30) sur la base du signal d'intention de freinage reçu (Si) ; et
un module de commande d'actionneur (50a) configuré pour générer individuellement un signal de commande d'actionneur respectif (Sa) pour chaque roue sur la base du signal d'intention de freinage individuel.

14. Système de freinage selon l'une quelconque des revendications précédentes comprenant :
un actionneur automobile pour appliquer une force ou un couple dans un composant d'automobile, en particulier un actionneur de frein pour freiner une roue,
l'actionneur automobile comprenant
un mécanisme d'actionnement (20) comprenant
un dispositif actionné (20c) pour appliquer une quantité de force ou de couple, et
un moteur électrique (20m) relié de manière opérationnelle au dispositif actionné (20c) via une transmission (20t) ; et
un contrôleur d'actionneur (10) comprenant
un circuit principal (11) configuré pour fournir un signal de puissance (Sp) au moteur électrique (20m) sur la base d'un premier signal de commande d'actionneur (Sa) reçu d'un contrôleur central (50) via un port de réseau principal (51p),
un circuit de secours (12) configuré pour fournir indépendamment le signal de puissance (Sp), en cas de panne du circuit principal (11), sur la base d'un deuxième signal de commande d'actionneur (Sa) reçu du contrôleur central (50) via un port réseau de secours (52p), et
un circuit de commutation (13) configuré pour relayer exclusivement le signal de puissance (Sp) reçu soit du circuit principal (11) soit du circuit de secours (12) au mécanisme d'actionnement (20) sur la base d'un signal de commutation (Sw) reçu indépendamment des signaux de commande d'actionneur (Sa) via un port de signal (13p) séparé des ports de réseau principal et de secours (51p,52p).

15. Actionneur d'automobile (10, 20) selon la revendication précédente dans lequel l'actionneur d'automobile et configuré comme un actionneur de frein pour freiner une roue (30), dans lequel le contrôleur d'actionneur (10) est configuré pour appliquer un signal de puissance respectif (Sp) pour alimenter le mécanisme d'actionnement (20), par exemple comprenant un dispositif de serrage configuré pour serrer un disque de frein relié à la roue (30), pour appliquer une quantité de freinage (BR) à la roue (30) sur la base au moins du signal de commande d'actionneur respectif (Sa) et du signal de commutation (Sw) reçu par le contrôleur d'actionneur (10).
